# EUROPÄISCHE PATENTANMELDUNG

(11) **EP 1 775 933 A1**
(43) Veröffentlichungstag der Anmeldung: **18.04.2007**
(21) Anmeldenummer: 05022471.6
(22) Anmeldetag: 14.10.2005
(51) Int. Cl.: H04N 1/60

(54) **Tintenstrahldruckmaschinenbetriebsverfahren**

(71) Anmelder: Bayerlein, Christian, 86156 Augsburg (DE)
(72) Erfinder: Bayerlein, Christian, 86156 Augsburg (DE)
(74) Vertreter: Weiss, Manfred Erwin

(57) **Zusammenfassung**

Tintenstrahldruckmaschinenbetriebsverfahren zum Herstellen eines mehrfarbigen Druckbildes (14) durch Aufbringen von mindestens zwei Druckfarben auf einen Bedruckstoff durch eine Tintenstrahldruckmaschine (2), wobei der Druck auf Zeitungspapier (7) als Bedruckstoff erfolgt und die mindestens zwei Druckfarben mit einem gegenüber einem Offsetdruck reduzierten maximalen Farbauftrag auf den Bedruckstoff aufgebracht werden.

## Beschreibung

Die Erfindung betrifft ein Tintenstrahldruckmaschinenbetriebsverfahren nach dem Oberbegriff von Anspruch 1 und ein Prozessierverfahren nach Anspruch 6.

Das Anwendungsgebiet der Erfindung ist der Zeitungsdruck, insbesondere der Zeitungsdruck mit digitalen Daten.

Gemäß dem Stand der Technik werden Zeitungen mit einer Offsetdruckmaschine, in der Regel einer Rollenoffsetdruckmaschine gedruckt. Die gedruckten Zeitungen werden dann durch Logistikdienste beispielsweise an den Einzelhandel oder an Zeitungsausträger verteilt. Wenn große Distanzen zu überbrücken sind, beispielsweise in andere Regionen eines Landes oder ins Ausland, erhält der Leser die Zeitung häufig erst mit einer Verzögerung von einem oder mehreren Tagen nach dem Druckdatum. Ein Offsetdruck im Ausland ist wegen der relativ kleinen Auflage oftmals zu teuer.

Ein Druck der Zeitungen auf der Basis der vorhandenen Druckdaten war, wo ein Offsetdruck unrentabel war, nur im Schwarz-Weiß-Druck auf entsprechendem Zeitungspapier möglich oder im Farbdruck auf dickerem und damit teurerem Papier. Ferner vermittelten die so erzeugten Druckprodukte dem Leser nicht das Gefühl, eine richtige Zeitung in der Hand zu halten.

Tintenstrahldruckmaschinen zum Herstellen eines mehrfarbigen Druckbildes durch Aufbringen von mindestens zwei Druckfarben auf einen Bedruckstoff sind bekannt und kommerziell erhältlich.

Durch die Erfindung soll die Aufgabe gelöst werden, auf kostengünstige Weise Zeitungen auf einem Zeitungspapier in kleinen Auflagen zu drucken.

Diese Aufgabe wird gemäß der Erfindung durch die Merkmale von Anspruch 1 und die Merkmale von Anspruch 6 gelöst.

Gemäß der Erfindung erfolgt der Zeitungsdruck mit einem Tintenstrahldruckmaschinenbetriebsverfahren zum Herstellen eines mehrfarbigen Druckbildes durch Aufbringen von mindestens zwei Druckfarben, insbesondere durch Aufbringen von vier Druckfarben auf einen Bedruckstoff mittels einer Tintenstrahldruckmaschine, wobei der Druck auf Zeitungspapier als Bedruckstoff erfolgt und die mindestens zwei Druckfarben mit einem maximalen Farbauftrag auf den Bedruckstoff aufgebracht werden, der gegenüber einem maximalen Farbauftrag beim Offsetdruck reduziert ist.

Ein Prozessierverfahren zum Prozessieren von Ausgangsdaten, wie sie beispielsweise für den Offsetdruck verwendet werden, ist in Anspruch 6 angegeben. Die so erzeugten modifizierten Ausgangsdaten stellen einen reduzierten Farbauftrag beim Tintenstrahldruck sicher.

Weitere Merkmale der Erfindung sind in den Unteransprüchen enthalten.

Im folgenden wird die Erfindung mit Bezug auf die Zeichnungen anhand von bevorzugten Ausführungsformen als Beispiele beschrieben.

In den Zeichnungen zeigen
- Fig. 1: schematisch eine Ausführungsform einer erfindungsgemäß konfigurierten Tintenstrahldruckmaschine zur Durchführung des erfindungsgemäßen Tintenstrahldruckmaschinenbetriebsverfahrens und eine Ausführungsform einer erfindungsgemäß konfigurierten Prozessiervorrichtung zur Durchführung des erfindungsgemäßen Prozessierverfahrens;
- Fig. 2: eine Aufsicht auf die Druckmaschine aus Fig. 1
- Fig. 3: schematisch einen Teil einer Zeitungspapierbahn mit aufgedrucktem Druckbild;
- Fig. 4: schematisch eine Ausführungsform einer Graukomponenten-Entfernungs-Kurve;
- Fig. 5: schematisch eine weitere Ausführungsform einer Graukomponenten-Entfernungs-Kurve;
- Fig. 6: schematisch die Veränderung von Farbauftragswerten eines Druckbildteils durch eine Ausführungsform eines erfindungsgemäßen Prozessierverfahren;
- Fig. 7: schematisch eine Ausführungsform eines erfindungsgemäßen Workflows zur Bereitstellung einer mittels einer Tintenstrahldruckmaschine gedruckten Zeitung.

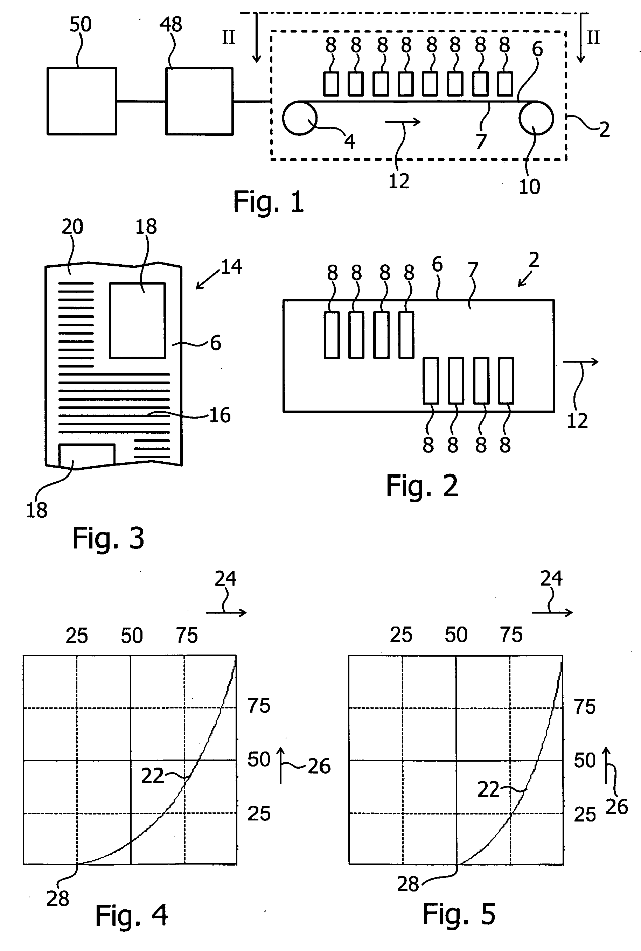

Fig. 1 zeigt eine Ausführungsform einer erfindungsgemäß konfigurierten Tintenstrahldruckmaschine 2. Tintenstrahldruckmaschinen dieser Art werden auch als Tintenstrahldigitaldruckmaschinen bezeichnet. In den dargestellen Ausführungsformen werden, wie für Tintenstrahldruckmaschinen üblich, vier Grundfarben Cyan, Magenta, Gelb und Schwarz eingesetzt (CMYK-Farbraum). Die Erfindung ist jedoch nicht hierauf beschränkt sondern auch für andere Farbräume mit mehr oder weniger Grundfarben ausführbar.

Die Tintenstrahldruckmaschine 2 enthält eine Zeitungspapiervorratsrolle 4, welche eine aufgerollte Zeitungspapierbahn 6 enthält, die als Bedruckstoff verwendet wird. Die Zeitungspapierbahn 6 (nachfolgend kurz als Papierbahn bezeichnet) wird durch die Druckmaschine 2 geführt und wird hierbei von acht Tintenstrahldruckköpfen 8 bedruckt und vorliegend auf einer Aufwickelrolle 10 aufgewickelt. Anstelle der Aufwickelrolle 10 kann beispielsweise eine Schneidevorrichtung zum Separieren der Papierbahn 6 in einzelne Zeitungsbögen und ein Sammler zum Sammeln der einzelnen Zeitungsbögen vorgesehen sein (nicht dargestellt). In der in Fig. 1 dargestellten Ausführungsform sind für jede Grundfarbe (Cyan, Magenta, Gelb, Schwarz) zwei Tintenstrahldruckköpfe 8 vorgesehen, die quer zur Bahnlaufrichtung 12 versetzt sind (siehe Fig. 2) und somit die gesamte Breite der Papierbahn 6 bedrucken können. Andere Konfigurationen, insbesondere eine andere Anzahl an Druckköpfen sind möglich, beispielsweise eine Tintenstrahldruckmaschine mit vier Druckköpfen oder eine Tintenstrahldruckmaschine mit sechzehn Druckköpfen ist möglich.

Zeitungspapier 7 ist eine Papiersorte mit einem Anteil an Altpapier, der je nach Hersteller variiert. Das Flächengewicht von Zeitungspapier 7 liegt in der Regel zwischen 35 g/m² und 7.0 g/m², vorzugsweise zwischen 40 g/m² und 65 g/m². In den exemplarisch beschriebenen Ausführungsformen wurde ein Zeitungspapier 7 mit einem Flächengewicht von 48,8 g/m² verwendet.

Ein erfindungsgemäßes Tintenstrahldruckmaschinenbetriebsverfahren ist vorgesehen zum Herstellen eines mehrfarbigen Druckbildes 14 durch Aufbringen von mindestens zwei Druckfarben, beispielsweise wie dargestellt vier Grundfarben (Cyan, Magenta, Gelb, Schwarz) auf einen Bedruckstoff mittels einer Tintenstrahldruckmaschine 2.

Gemäß der Erfindung erfolgt der Druck auf Zeitungspapier 7 als Bedruckstoff und die mindestens zwei Druckfarben werden mit einem gegenüber einem Offsetdruck reduzierten maximalen Farbauftrag auf den Bedruckstoff aufgebracht. Die Fig. 2 zeigt einen Teil der Zeitungspapierbahn 6 mit einem darauf gedrucktem Druckbild 14, welches Text 16 und Photos 18 umfasst.

Der auf das Zeitungspapier 7 in einem Druckbildteil aufgebrachte Farbauftrag ist ein Wert, der angibt, welche Farbbedeckung in % in dem Druckbildteil erfolgt. Der theoretisch maximale Farbauftrag ist folglich bei einem Vierfarbdruck 400 %. Ein Druckbildteil kann beispielsweise ein Pixel, wie bei der pixelbasierten Definition des Druckbildes 14, oder eine Fläche, die einen über die Fläche konstanten Farbauftrag aufweist, wie bei der vektorbasierten Definition des Druckbildes 14, sein.

Die Druckdaten definieren den Farbauftrag lokal für jeden Druckbildteil des Druckbildes 14 und definieren somit für jedes Druckbild 14 auch den maximalen Farbauftrag. Ein Kerngedanke der Erfindung ist es, den Farbauftrag beim Druck auf Zeitungspapier 7 zu reduzieren und so die Qualität des Druckbildes 14 zu erhöhen und ein Durchscheinen auf die Rückseite der Bedruckseite zu vermeiden. Dies ist insbesondere deshalb erforderlich, da Zeitungspapier 7 regelmäßig zweiseitig bedruckt wird. Die Erfindung ist insbesondere für Druckbildabschitte, beispielsweise Photos oder farbigen Text relevant, bei denen zwei oder mehr Farben auf die selbe Stelle des Zeitungspapiers gedruckt werden. Insbesondere ist die Erfindung für dunkle Druckbildabschnitte oder dunkle Druckbildteile relevant, ohne das erfindungsgemäße Tintenstrahldruckmaschinenverfahren diese Druckbildteile auf die abgewandte Seite der Farbauftragsseite 20 des Zeitungspapiers durchscheinen.

Als Druckfarbe wird vorzugsweise jeweils eine wasserlösliche Tinte verwendet.

Die Reduzierung des maximalen Farbauftrags bei dem Tintenstrahldruck gegenüber dem maximalen Farbauftrag beim Offsetdruck erfolgt gemäß einer Ausführungsform der Erfindung insbesondere dadurch, dass für die Tintenstrahldruckmaschine 2 Druckdaten bereitgestellt werden, welche das Druckbild 14 repräsentieren und einen dem Druckbild 14 entsprechenden Farbauftrag definieren, und dass der durch die Druckdaten definierte maximale Farbauftragswert gegenüber einem maximalen Farbauftragswert für den Offsetdruck reduziert ist.

Der maximale Farbauftrag auf das Zeitungspapier 7 beträgt vorzugsweise weniger als 100 %. Vorzugsweise beträgt der maximale Farbauftrag auf das Zeitungspapier 7 zwischen 60% und 80 %, bevorzugter zwischen 70 % und 75 % und am bevorzugtesten von 72,5 %.

Gemäß einer Ausführungsform der Erfindung werden für die Tintenstrahldruckmaschine 2 Druckdaten bereitgestellt, welche das Druckbild 14 repräsentieren und einen dem Druckbild 14 entsprechenden Farbauftrag definieren und die Tintenstrahldruckmaschine 2 wird so konfiguriert, dass nur ein vorbestimmter Bruchteil des durch die Druckdaten definierten Farbauftrages auf das Zeitungspapier 7 abgegeben wird. Beispielsweise kann der durch die Druckdaten definierte maximale Farbauftragswert bei dieser Ausführungsform größer als 100 % sein und der auf der Basis dieser Druckdaten auf das Zeitungspapier 7 aufgebrachte maximale Farbauftrag kann kleiner als 100 % sein.

Gemäß einer bevorzugten Ausführungsform der Erfindung werden Druckdaten bereitgestellt, welche einen maximalen Farbauftrag definieren, der doppelt so hoch ist wie der gewünschte maximale Farbauftrag auf dem Zeitungspapier 7 und die Druckmaschine 2 kann dann so konfiguriert werden, dass sie nur die Hälfte des durch die Druckdaten definierten Farbauftrags auf das Zeitungspapier 7 abgibt. Diese Reduktion des Farbauftrags auf das Zeitungspapier 7 gegenüber dem durch die Druckdaten definierten Farbauftrag kann beispielsweise dadurch erfolgen, dass eine Druckmaschine 2, die für einen 100%-Farbauftrag zwei Tintentropfen pro Bildpunkt (Pixel) auf das Zeitungspapier 7 abgibt, so konfiguriert wird, dass sie stets anstelle von zwei Tintentropfen nur einen Tintentropfen abgibt. Bei dieser Ausführungsform können die Druckdaten verwendet werden, die beispielsweise einen maximalen Farbauftragswert von weniger als 200 %, insbesondere einen maximalen Farbauftragswert zwischen 120 % und 160 %, bevorzugter zwischen 140 % und 150 % und am bevorzugtesten von 145 % definieren.

Gemäß einer alternativen Ausführungsform wird die Druckmaschine 2 so konfiguriert, dass sie den durch die Druckdaten definierten Farbauftrag auf das Zeitungspapier 7 aufträgt. In diesem Fall werden Druckdaten bereitgestellt, welche einen maximalen Farbauftragswert definieren, der dem gewünschten maximalen Farbauftrag auf das Zeitungspapier 7, beispielsweise weniger als 100 %, entspricht.

Im folgenden wird beschrieben, wie aus Ausgangsdaten, die für den Tintenstrahldruck auf Zeitungspapier 7 ungeeignet sind, die für den Tintenstrahldruck-auf-Zeitungspapier 7 geeigneten Druckdaten erzeugt werden können. Die Ausgangsdaten können einer Druckerei beispielsweise per email übermittelt werden, so dass die Ausgangsdaten weltweit innerhalb weniger Minuten zur Verfügung gestellt werden können.

Dies erfolgt durch ein erfindungsgemäßes Prozessierverfahren zum Prozessieren der Ausgangsdaten. Die Ausgangsdaten liegen in digitaler Form vor. In der Regel sind die Ausgangsdaten Druckdaten für den Offsetdruck, da die Zeitungen in der Originalauflage im Offsetdruck hergestellt werden. Die Ausgangsdaten repräsentieren das mehrfarbige Druckbild 14 und definieren einen maximalen Ausgangsdaten-Farbauftragswert. Das. Prozessierverfahren enthält den Schritt "Modifizieren der Ausgangsdaten, so dass die hierdurch erhaltenen modifizierten Ausgangsdaten einen maximalen Farbauftragswert definieren, der kleiner ist als der durch die Ausgangsdruckdaten definierte maximale Ausgangsdaten-Farbauftragswert". Dieses Modifizieren der Druckdaten kann beispielsweise durch geeignete Farbmanagement-Computerprogramme erfolgen, beispielsweise durch "Dalim-Twist" der Firma Dalim Software GmbH, D-77694 Kehl.

In diesem Sinne umfasst die Erfindung die Verwendung von Farbmanagement-Computerprogrammen für die Reduzierung des Farbauftrags bei einem Tintenstrahlauf-Zeitungspapierdruck.

Die Ausgangsdruckdaten und die modifizierten Ausgangsdruckdaten liegen vorzugsweise im PDF-Format (Portable Document Format) vor, können jedoch auch in einem anderen geeigneten Format vorliegen.

Gemäß einer bevorzugten Ausführungsform des Prozessierverfahrens definieren die Ausgangsdaten Einzelfarbauftragswerte für jede der mindestens zwei Farben, beispielsweise für jede der vier CMYK-Farben, wobei durch die Ausgangsdaten jedem Druckbildteil des Druckbildes 14 für jede der mindestens zwei Farben jeweils ein Einzelfarbauftragswert zugeordnet ist.

Jeder Einzelfarbauftragswert definiert eine Farbbedeckung des zugeordneten Druckbildteils mit der betreffenden Farbe. Das Modifizieren der Ausgangsdaten erfolgt so, dass die hierdurch erhaltenen modifizierten Ausgangsdaten für jeden der Druckbildteile einen Farbauftragswert definieren, der kleiner oder gleich dem maximalen Farbauftragswert ist, der durch die modifizierten Ausgangsdaten definierten ist. Der durch die modifizierten Ausgangsdaten für jedes Druckbildteil definierte Farbauftragswert ist die Summe der Einzelfarbauftragswerte über die mindestens zwei Farben, beispielsweise für den CMYK-Farbraum über die vier CMYK-Farben.

Wie im Fall des CMYK-Farbraums können die "mindestens zwei Farben" die Farbe "Schwarz" und weitere Farben umfassen (bei CMYK die Farben Cyan, Magenta und Gelb), wobei durch Kombination der weiteren Farben Grauwerte darstellbar sind. Vorzugsweise umfasst das Prozessierverfahren in diesem Fall eine Graukomponenten-Entfernung (Gray Component Removal, GCR), bei welcher für graue Druckbildteile, welche die weiteren Farben enthalten, ab einem vorbestimmten Grauwert die Einzelfarbauftragswerte der weiteren Farben reduziert werden und der Einzelfarbauftragswert der Farbe Schwarz erhöht wird. D. h. bei Farbtönen, an denen die weiteren Farben beteiligt sind, wird ein Teil der weiteren Farben durch Schwarz ersetzt. Beispielsweise werden bei einer Graukomponenten-Entfernung im CMYK-Farbraum bei Farbtönen, an denen Cyan, Magenta und Gelb beteiligt sind, Cyan, Magenta und Gelb teilweise durch die Schwarz ersetzt.

Fig. 4 und Fig. 5 zeigen exemplarisch jeweils eine Graukomponenten-Entfernungskurve 22, wie sie bei dem erfindungsgemäßen Prozessierverfahren zur Anwendung kommen kann. An der x-Achse 24 ist der CMY-Grauwert aufgetragen, d. h. der Grauwert, der durch einen Farbauftrag von Cyan, Magenta und Gelb erzeugt wird. An der y-Achse 26 ist der Einzelfarbauftragswert für die Farbe Schwarz aufgetragen, durch welchen der CMY-Grauwert ersetzt wird. Gemäß der Graukomponenten-Entfernungskurve 22 von Fig. 4 wird ab einem CMY-Grauwert von 25 % (Schwellwert 28), in den Ausgangsdaten Cyan, Magenta und Gelb in den modifizierten Ausgangsdaten durch einen entsprechenden Anteil Schwarz ersetzt. In Fig. 5 beträgt dieser Schwellwert 50 %. Vorzugsweise liegt der Schwellwert 28 für den CMY-Grauwert zwischen 20 und 35 %.

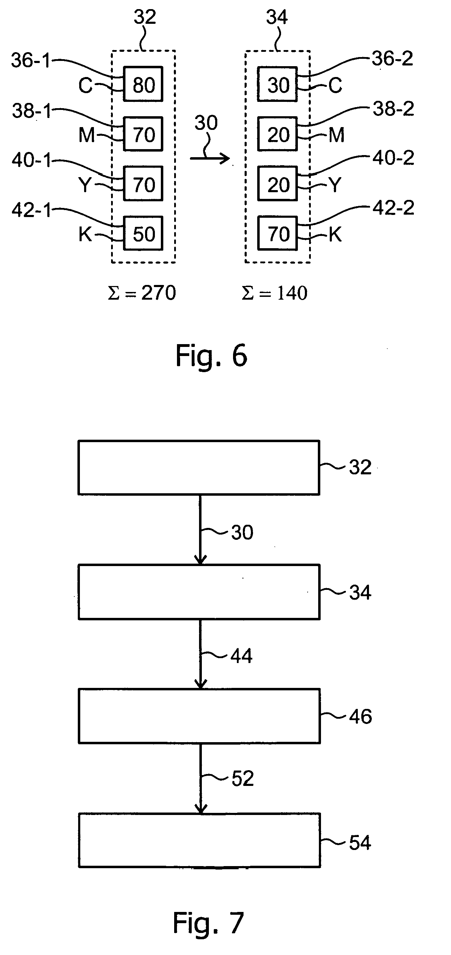

Ein Beispiel für die Veränderung von Farbauftragswerten eines Druckbildteils durch eine Ausführungsform eines erfindungsgemäßen Prozessierverfahrens 30, bei welchem gegenüber den Ausgangsdaten 32 der maximale Farbauftrag reduziert und eine Graukomponenten-Entfernung durchgeführt wird, ist in Fig. 6 dargestellt. Hier wird durch das erfindungsgemäße Prozessierverfahren der Farbauftrag von 270 % für die Ausgangsdaten 32 auf 140 % für die modifizierten Ausgangsdaten 34 reduziert und der Einzelfarbauftragswert 36-1, 38-1, 40-1 für jeweils Cyan (C), Magenta (M), und Gelb (Y) der Ausgangsdaten 32 wird reduziert und der Einzelfarbauftragswert 42-1 der Ausgangsdaten 32 für Schwarz (K) erhöht, wodurch die entsprechenden Einzelfarbauftragswerte 36-2, 38-2, 40-2, 42-2 der modifizierten Ausgangsdaten 34 erzeugt werden. Es versteht sich, dass diese Veränderung der Farbauftragswerte für jedes Druckbildteil, z. B. für jedes Pixel oder für jede einfarbige Fläche, durchgeführt wird, wobei die Farbmanagementsoftware sicherstellt, dass der optische Eindruck des Druckbildes auf einen Betrachter weitestgehend erhalten bleibt.

Bei dem Prozessierverfahren können Einzelfarbauftragswerte, die kleiner als ein vorbestimmter Schwellwert sind, auf den Wert 0 % gesetzt werden. Der vorbestimmte Schwellwert kann beispielsweise 2 % bis 5 %, insbesondere 3 % sein. Dadurch wird vermieden, dass auf dem Zeitungspapier 7 eine helle Fläche als weiße Fläche mit einzelnen farbigen Punkten dargestellt wird.

Fig. 7 zeigt schematisch eine Ausführungsform eines erfindungsgemäßen Workflows zur Bereitstellung einer mittels einer Tintenstrahldruckmaschine gedruckten Zeitung.

In einem ersten Schritt wird das oben beschriebene erfindungsgemäße Prozessierverfahren 30 auf die Ausgangsdaten 32, beispielsweise eine PDF-Datei, die das gewünschte Druckbild 14 für den Offsetdruck definiert, angewandt. Auf diese Weise werden aus den Ausgangsdaten die modifizierten Ausgangsdaten 34 erzeugt. Die modifizierten Ausgangsdaten 34 werden dann in einem zweiten Schritt gemäß einem für die Tintenstrahldruckmaschine 2 spezifischen Ripp-Verfahren 44 gerippt (gerastert). Auf diese Weise werden aus den modifizierten Ausgangsdaten 34 die Druckdaten 46 für die Druckmaschine 2 erzeugt. Das Erzeugen der Druckdaten 46 kann beispielsweise mit einem von der Druckmaschine 2 und deren Steuerung 48 separaten Computer 50 erfolgen, wie in Fig. 1 dargestellt. Die Druckdaten werden an die Steuerung 48 der Tintenstrahldruckmaschine 2 abgegeben, welche die Tintenstrahldruckmaschine 2 entsprechend steuert, um gemäß dem erfindungsgemäßen Tintenstrahldruckmaschinenbetriebsverfahren 52 auf dem Zeitungspapier 7 einen Farbauftrag zu erzeugen, der von den Druckdaten und der Konfiguration der Tintenstrahldruckmaschine 2 (gegebenenfalls Reduzierung der Tintenmenge auf einen Bruchteil des durch die Druckdaten definierten Farbauftrags) abhängig ist. Auf diese Weise wird mittels Tintenstrahldigitaldruck auf Zeitungspapier eine Zeitung 54 erzeugt, welche beim Leser den selben Eindruck wie eine mittels Offsetdruck gedruckte Zeitung hervorruft. Es versteht sich, dass wenn die einzelnen Seiten des Druckbildes in den Ausgangsdaten nacheinander angeordnet sind, der Workflow den Schritt des Ausschießens umfasst, in welchem die einzelnen Seiten so plaziert werden, dass sie in der fertig gesammelten Zeitung an der richtigen Stelle sind.

Der Workflow, insbesondere das Starten des Prozessierverfahrens und des Tintenstrahldruckmaschinenbetriebsverfahrens kann manuell durch eine Bedienperson oder vollautomatisch erfolgen.

Die Erfindung ist nicht auf die dargestellten Ausführungsformen beschränkt. Sie ergibt sich vielmehr aus der fachmännischen Gesamtbetrachtung der Ansprüche, der Beschreibung und der Zeichnungen.

## Patentansprüche

1. Tintenstrahldruckmaschinenbetriebsverfahren zum Herstellen eines mehrfarbigen Druckbildes (14) durch Aufbringen von mindestens zwei Druckfarben auf einen Bedruckstoff mittels einer
Tintenstrahldruckmaschine (2),
**dadurch gekennzeichnet,**
**dass** der Druck auf Zeitungspapier (7) als Bedruckstoff erfolgt; und dass die mindestens zwei Druckfarben mit einem gegenüber einem Offsetdruck reduzierten maximalen Farbauftrag auf den Bedruckstoff aufgebracht werden.

2. Verfahren nach Anspruch 1,
**dadurch gekennzeichnet,**
**dass** für die Tintenstrahldruckmaschine (2) Druckdaten bereitgestellt werden, welche das Druckbild (14) repräsentieren, und dass der durch die Druckdaten definierte maximale Farbauftragswert gegenüber einem maximalen Farbauftragswert für den Offsetdruck reduziert ist.

3. Verfahren nach Anspruch 1 oder 2,
**dadurch gekennzeichnet,**
**dass** der maximale Farbauftrag auf das Zeitungspapier (7) weniger als 100 % beträgt.

4. Verfahren nach einem der vorhergehenden Ansprüche,
**dadurch gekennzeichnet,**
**dass** für die Tintenstrahldruckmaschine (2) Druckdaten bereitgestellt werden, welche das Druckbild (14) repräsentieren und einen dem Druckbild (14) entsprechenden Farbauftrag definieren; und dass die Tintenstrahldruckmaschine (2) so konfiguriert wird, dass nur ein vorbestimmter Bruchteil des durch die Druckdaten definierten Farbauftrages auf das Zeitungspapier (7) abgegeben wird.

5. Verfahren nach Anspruch 2 oder 3,
**dadurch gekennzeichnet,**
**dass** der durch die Druckdaten definierte maximale Farbauftragswert kleiner als 100 % ist.

6. Prozessierverfahren zum Prozessieren von Ausgangsdaten, welche das mehrfarbige Druckbild (14) repräsentieren und einen maximalen Ausgangsdaten-Farbauftragswert definieren, und Bereitstellen von Druckdaten für ein Tintenstrahldruckmaschinenbetriebsverfahren nach einem der vorhergehenden Ansprüche, enthaltend den Schritt "Modifizieren der Ausgangsdaten, so dass die hierdurch erhaltenen modifizierten Ausgangsdaten einen maximalen Farbauftragswert definieren, der kleiner ist als der durch die Ausgangsdruckdaten definierte maximale Ausgangsdaten-Farbauftragswert".

7. Prozessierverfahren nach Anspruch 6,
**dadurch gekennzeichnet, dass** die Ausgangsdaten Einzelfarbauftragswerte für jede der mindestens zwei Farben definieren, wobei durch die Ausgangsdaten jedem Druckbildteil (Pixel, Fläche) des Druckbildes (14) für jede der mindestens zwei Farben jeweils ein Einzelfarbauftragswert zugeordnet ist; wobei jeder Einzelfarbauftragswert eine Farbbedeckung des zugeordneten Druckbildteils mit der betreffenden Farbe definiert; und dass das Modifizieren der Ausgangsdaten so erfolgt, dass die hierdurch erhaltenen modifizierten Ausgangsdaten für jeden der Druckbildteile einen Farbauftragswert definieren, der kleiner oder gleich dem maximalen Farbauftragswert ist, der durch die modifizierten Ausgangsdaten definierten ist.

8. Prozessierverfahren nach Anspruch 7,
**dadurch gekennzeichnet,**
**dass** die mindestens zwei Farben die Farbe "Schwarz" und weitere Farben umfassen, wobei durch Kombination der weiteren Farben Grauwerte darstellbar sind, und dass eine Graukomponenten-Entfernung (Gray Component Removal, GCR) erfolgt, bei welcher für graue Druckbildteile, welche die weiteren Farben enthalten, ab einem vorbestimmten Grauwert die Einzelfarbauftragswerte der weiteren Farben reduziert werden und der Einzelfarbauftragswert der Farbe Schwarz erhöht wird.

9. Prozessierverfahren nach Anspruch 7 oder 8,
**dadurch gekennzeichnet, dass** Einzelfarbauftragswerte, die kleiner als ein bestimmter Schwellwert sind, auf den Wert 0 % gesetzt werden.

10. Tintenstrahldruckmaschinenbetriebsverfahren nach einem der Ansprüche 1 bis 5 oder Prozessierverfahren nach einem der Ansprüche 6 bis 9,
**dadurch gekennzeichnet,**
**dass** das Druckbild (14) in den vier Farben, "Cyan", "Magenta", "Gelb" und "Schwarz" (CMYK) repräsentiert ist.
